(19)

Europäisches
Patentamt
European
Patent Office
Office européen
des brevets

(11)  **EP 2 783 573 A2**

(12)  **EUROPEAN PATENT APPLICATION**

(43) Date of publication:
01.10.2014 Bulletin 2014/40

(51) Int Cl.:
A23C 3/00 (2006.01)          A23C 7/04 (2006.01)
A23C 9/00 (2006.01)          A23C 9/15 (2006.01)
A23C 9/152 (2006.01)          A23C 3/037 (2006.01)
A23C 9/142 (2006.01)

(21) Application number: 14173696.7

(22) Date of filing: 27.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 27.01.2009 US 147614 P

(62) Document number(s) of the earlier application(s) in
accordance with Art. 76 EPC:
10702017.4 / 2 391 222

(71) Applicant: Arla Foods Amba
8260 Viby J (DK)

(72) Inventors:
• Holst, Hans Henrik
6920 Videbæk (DK)

• Gunther, William Stuart
7260 Sønder Omme (DK)
• Lundgren, Kristoffer
11244 Stockholm (SE)
• Andersen, Jørgen
7400 Herning (DK)

(74) Representative: Østergaard, Steen
Guardian IP Consulting I/S
Diplomvej, Building 381
2800 Kgs. Lyngby (DK)

Remarks:
This application was filed on 24-06-2014 as a
divisional application to the application mentioned
under INID code 62.

(54)  **Long shelf life milk and milk-related products, and a process and milk processing plant for their manufacture**

(57)     The present invention relates to long shelf life milk or milk-related products as well as to a method for producing such long shelf life products and a milk processing plant for implementation of the method. The method of the invention is characterised by the combination of physical separation of microorganisms and a high temperature treatment for at most 200 msec, and the resulting product has been found to have advantageous properties.

## Fig. 3

EP 2 783 573 A2

Printed by Jouve, 75001 PARIS (FR)

**Description**

**FIELD OF THE INVENTION**

The present invention relates to long shelf life milk and milk-related products as well as to a method for producing such long shelf life products and a milk processing plant for the implementation of the method.

**BACKGROUND**

Milk and milk-derived products are heat treated in order to inactivate undesirable enzymes and destroy pathogenic and spoilage microorganisms. The heating process may additionally cause physical and chemical changes (protein denaturation, browning, etc.), which positively or negatively affect the products sensory characteristics and nutritional value. Milk and milk-derived products may be treated by a range of processes, which differ in the severity of the heat treatment. Irrespective of the heat treatment, the goal is minimization of possible health hazards arising from pathogenic microorganisms associated with milk and minimizing physical, chemical, sensory, and nutritional changes to the final product.

The three general types of heat treatment (from mild to severe) are thermization, pasteurisation, and sterilization. Thermization is a mild heat treatment (typically 57-68 degrees C for 15 sec.) sufficient to destroy gram-negative psychotropic vegetative microorganisms and increase the refrigerated shelf life. Pasteurisation (typically 72 degrees C for 15 sec.) destroys most of the vegetative pathogenic organisms (bacteria, yeasts, and moulds), which may cause food poisoning. Sterilization is the most severe heat treatment (typically 121 degrees C for 3 min.) and destroys all microorganisms (vegetative and spores) or renders them incapable of further growth.

The severity of the heat treatment process will affect the shelf life, as well as the final product qualities, and is chosen based on the intended use of the products. Increasing the severity of the heat treatment can generally reduce the proportion of product spoilage; however this must be balanced against the increased chemical, physical, sensory, and nutritional changes to the final product. When times between production and consumption are short, a minimal level of heat treatment may suffice. When times before consumption are larger or products are exposed to harsh environments (tropical), the product must have a good microbial quality and adverse effects of severe heat treatments must be accepted.

To extend the shelf life of milk at ambient temperature beyond several days, it must be heated to higher temperatures than during pasteurisation and post processing contamination must be eliminated. Temperatures in excess of 100 degrees C are required, however this causes undesirable changes in the milk: decreased pH, calcium precipitation, protein denaturation, Maillard browning, and modification of casein; these changes are important and affect the sensory characteristics, nutritional value, susceptibility to foul heat exchangers, and sediment formation.

Ultra high temperature (UHT) processing is well-known in the prior art as a continuous flow process, where the milk is heated in excess of 135 degrees C, held for approx. 4 sec., rapidly cooled, and aseptically packaged. UHT can involve using traditional heat exchangers to heat and cool the milk (indirect UHT) or direct mixing of milk and steam followed by cooling to remove the condensed steam (direct UHT). UHT milk undergoes fewer chemical reactions than sterilized milk, resulting in a product that is whiter, tastes less caramelised, has reduced whey protein denaturation, and reduced loss of heat-sensitive vitamins. Even so, the development of off-flavours, especially stale or oxidized flavour, during storage is the most important factor limiting the acceptability of UHT milk. This off-flavour development is associated with chemical reactions and changes (e.g. Maillard reaction and browning) that occur during processing and that continue subsequent storage.

Another type of heat treatment is described in WO 98/07,328, wherein a liquid such as fresh milk is heated to 150 degrees C for 1/100 sec. Such a heat treatment is reported to be gentler on the treated milk than UHT treatment but not as effective when it comes to killing microorganisms.

**SUMMARY OF THE INVENTION**

An object of the present invention is to provide long shelf life milk or milk-related products having an improved taste and particularly a reduced cooked taste as well as methods of producing such milk or milk-related products and milk processing plants for implementing said methods.

Another object of the present invention is to provide long shelf life milk or milk-related products which, relative to the long shelf life milk of the prior art, are healthier for the consumers who ingest them, as well as methods of producing such improved milk or milk-related products and milk processing plants for implementing said methods.

The present inventors have found that the combination removal of microorganisms by physical separation and heat treatment at a temperature in the range 140-180 degrees C for a period of at most 200 msec. surprisingly improves the taste of the resulting long shelf life milk product relative to a milk product where the physical separation step has been omitted.

The inventors have additionally found that the combination surprisingly reduces the degree denaturation of beta-lactoglobulin. The degree of denaturation of beta-lactoglobulin is an indicator of the denaturation and bio-inactivation of the other proteins of the milk serum. A low degree of denaturation indicates a higher amount of bioactive proteins and therefore a healthier long shelf life milk product than is obtained in comparable long shelf-like products of the prior art.

Additional objects and advantages of the invention are described below.

A broad aspect of the invention pertains to a method for producing a milk or milk-related product, which method comprises a high temperature treatment step in which a milk-like liquid is treat at a temperature above 110 degrees C for a short time, e.g. for at most 200 msec, such as for at most 0.1 sec or at most 90 msec.

A more specific aspect of the invention relates to a method for producing a milk or milk-related product, the method comprising the steps of:

a) providing a milk derivative,

b) physically separating microorganisms from said milk derivative, thus obtaining a partly sterilised milk derivative, and

c) exposing a first composition comprising said partly sterilised milk derivative to a High Temperature (HT)-treatment, wherein the first composition is heated to a temperature in the range of 140 - 180 degrees C, kept in that temperature range for a period of at most 200 msec, and then finally cooled.

Another aspect of the invention relates to a long shelf life milk or milk-related product, e.g. the milk or milk-related product obtainable by the method as described herein.

Yet an aspect of the invention relates to a milk processing plant for converting a milk derivative to a milk or milk-related product having a long shelf life, said plant comprising:

- a physical separation section adapted to remove microorganims from the milk derivative,

- a HT-treatment section in fluid communication with said physical separation section, which HT-treatment section is adapted to heat the liquid product of the physical separation section to a temperature in the range of 140-180 degrees C for a period of at most 200 msec. and subsequently cool the liquid product, and

- a packaging section for packaging the product of the milk processing plant, which packaging section is in fluid communication with the HT-treatment section.

A further aspect of the invention relates to the use of a combination of physical separation of microorganisms and HT-treatment of a milk derivative to reduce the cooked flavour and/or enhance the healthiness of the resulting long shelf life milk or milk-related product.

In the context of the present invention, the phrase "Y and/or X" means "Y" or "X" or "Y and X". Along the same line of logic, the phrase "$n_1$, $n_2$, ..., $n_{i-1}$, and/or $n_i$" means "$n_1$" or "$n_2$" or ... or "$n_{i-1}$" or "$n_i$" or any combination of the components: $n_1$, $n_2$,...$n_{i-1}$, and $n_i$.

In the context of the present invention, the term "milk or milk-related product" relates to milk-based products which may contain many, if not all, of the components of skim milk and optionally may contain various amounts milk fat, and possibly also non-dairy additives such as non-dairy flavours, sweeteners, minerals and/or vitamins.

The term "long shelf life", when used in the context of the present invention, relates to products, which have shelf-lives longer than ordinary pasteurized milk. Examples of the length of the shelf life and tests to measure the actual shelf life of the milk or milk-related product are described herein. In the context of the present invention, the term "extended shelf life" or ESL is used as a synonym for "long shelf life".

## BRIEF DESCRIPTION OF THE FIGURES

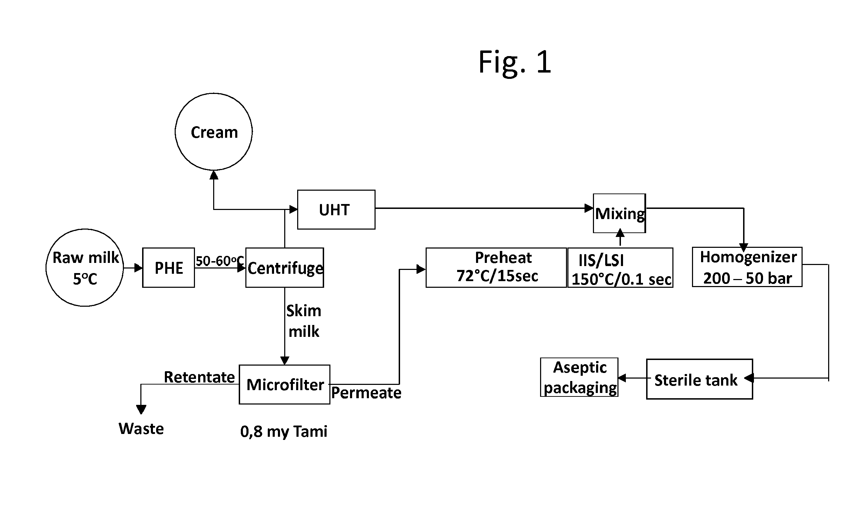

Figure 1 shows a flow diagram of an embodiment of method the invention, and is also an outline of a useful milk processing plant. The following abbreviations are used. PHE: Plate Heat Exchanger for pre-heating; DSI (UHT): direct steam injection (ultra high temperature sterilisation); IIS: instant infusion system (e.g. APV direct steam infusion apparatus); LSI: lenient steam injection (e.g. GEA/NIRO Saniheat steam injector). My: microns.

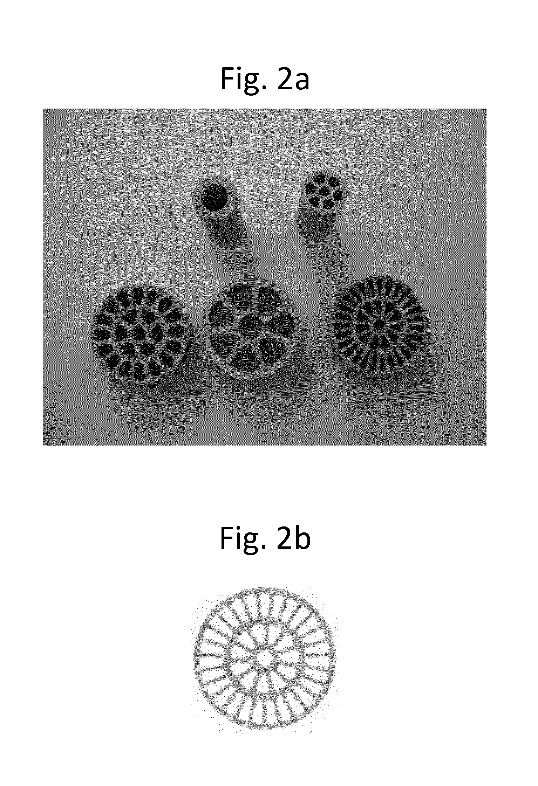

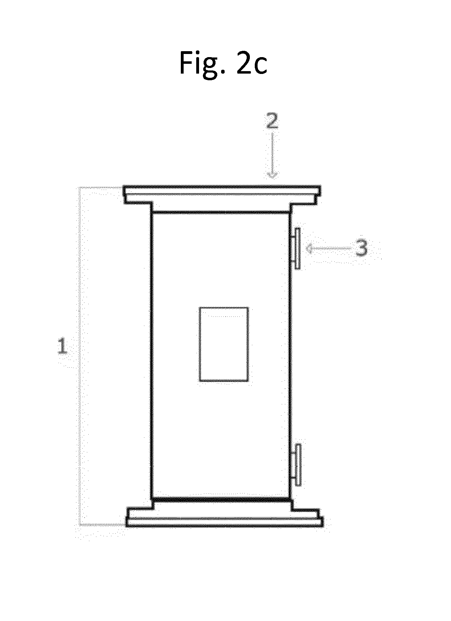

Figures 2a-c show some components which may be used for microfiltration. 2a: Isoflux ceramic tubular membranes comprising multiple channels with a length of 500 - 2000 mm and a pore size of 0.8 micrometer; 2b: an example of a tubular membrane shown in cross-section on left; 2c: Diagram of a purpose-designed housing (carter) for tubular membranes, showing height of carter corresponding to tubular membrane length (1); inlet (2) and outlet (3).

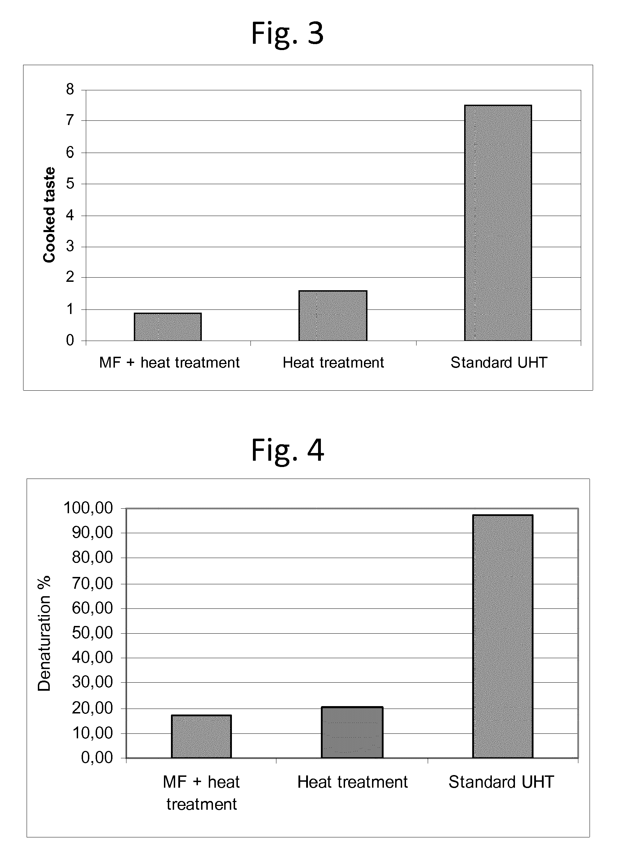

Figure 3 shows a graph of the cooked taste found in the milk or milk-related product of the present invention compared to prior art ESL- and UHT-milk.

Figure 4 shows a graph of the degree of denaturation of beta-lactoglobulin found in the milk or milk-related product of the present invention compared to prior art ESL- and UHT-milk.

## DETAILED DESCRIPTION OF THE INVENTION

As described above, an aspect of the invention relates to a method for producing a milk or milk-related product, the method comprising the steps of:

a) providing a milk derivative,
b) physically separating microorganisms from said milk derivative, thus obtaining a partly sterilised milk derivative,
c) exposing a first composition comprising said partly sterilised milk derivative to a High Temperature (HT)-treatment, wherein the first composition is heated to a temperature in the range of 140 - 180 degrees C, kept in that temperature range for a period of at most 200 msec, and then finally cooled.

Preferably, the method is implemented as a continuous process, and e.g. in a milk processing plant as described herein.

The present inventors have found that milk or milk-related products provided by the above-mentioned method surprisingly have a reduced cooked taste relative to milk or milk-related products which have been exposed to HT-treatment without prior physical separation of microorganisms. The milk or milk-related products therefore have a fresher taste than comparable prior art milk productsl Additionally, the present inventors have found that milk or milk-related products provided by the method of the invention have a surprisingly lower percentage of denatured of beta-lactoglobulin than milk or milk-related products which have been exposed to HT-treatment without prior physical separation of micro-organisms.

Yet an advantage of the present invention is that it provides a more $CO_2$-friendly, fresh-tasting milk. Due to its long shelf life and robustness to higher temperatures, the present milk or milk-related products can be transported at ambient temperature instead of at 5 degrees C. Low temperature logistics are highly energy consuming and typically require transportation of a relatively higher number of small, cooled loads of product, than a comparable ambient temperature logistic set-up. Milk or milk-related products of the present invention may therefore be produced and transported to the retailers with a lower $CO_2$ emission than prior art milk products having a similar fresh taste.

In a preferred embodiment of the invention, the method furthermore comprises the step of:

d) packaging a second composition comprising the HT-treated first composition.

As will be clear to the person skilled in the art, the method may contain one or more additional step(s) such as a homogenisation step, a storage step, a mixing step, temperature adjustment step, a pasteurisation step, a thermisation step, a centrifugation step, as well as combinations thereof.

The present inventors have additionally found that the method of the invention surprisingly increases the time a milk processing plant, in which method has been implemented, can operate before the plant has to be cleaned. This is perceived as advantageous and allows for cost savings in the production of the milk products. It is believed that the physical separation and removal of microorganisms during step b) significantly reduces the biofilm formation downstream in plant, which again reduces and/or delays the need for cleaning.

The milk derivative provided in step a) is preferably a liquid milk derivative. As used herein the term "milk derivative " includes whole milk, skim milk, fat-free milk, low fat milk, full fat milk, lactose-free or lactose-reduced milk (produced by hydrolyzing the lactose by lactase enzyme to glucose and galactose, or by other methods such as nanofiltration, electrodialysis, ion exchange chromatography and centrifugation technology), concentrated milk or dry milk.

Fat-free milk is a non-fat or skim milk product. Low-fat milk is typically defined as milk that contains from about 1% to about 2% fat. Full fat milk often contains about 3.25% fat. As used herein, the term "milk" is also intended to encompass milks from animal and plant sources.

Animal sources of milk include, but are not limited to, human, cow, sheep, goat, buffalo, camel, llama, mare and deer.

In a preferred embodiment of the invention, the milk derivative comprises bovine milk.

Plant sources of milk include, but are not limited to, milk extracted from soybean. In addition, the term "milk derivative" refers to not only whole milk, but also skim milk or any liquid component derived therefrom, such as whey or milk serum. By "whey" or "milk serum" is meant the milk component remaining after all or a substantial portion of the milk fat and casein contained in milk, are removed. The term whey also encompass so-called sweet whey, which is the by-product of rennet-based cheese production, and acid whey, which is the by-product of the acidification of milk which typically takes place during the production of caseinate or quark and cream cheese.

In an embodiment of the invention, the milk derivative of step a) comprises at most 60% w/w milk fat. An example of such a milk derivative is cream double.

In another embodiment of the invention, the milk derivative of step a) comprises at most 40% w/w milk fat. An example of such a milk derivative is whipping cream.

In yet an embodiment of the invention, the milk derivative of step a) comprises at most 20% w/w milk fat. An example of such a milk derivative is single cream/table cream containing approx. 18% w/w milk fat.

In a further embodiment of the invention, the milk derivative of step a) comprises at most 4% w/w milk fat. An example of such a milk derivative is full fat milk which typically contains 2-4% w/w milk fat, and preferably approx. 3% w/w milk fat.

In a further embodiment of the invention, the milk derivative of step a) comprises at most 2% w/w milk fat. An example of such a milk derivative is semi-skim milk which typically contains 0.7-2% w/w milk fat, and preferably 1-1.5% w/w milk fat.

In an additional embodiment of the invention, the milk derivative of step a) comprises at most 0.7 w/w milk fat. An example of such a milk derivative is skim milk which normally contains 0.1-0.7% w/w milk fat, and preferably 0.3-0.6% w/w milk fat, such as approx. 0.5% w/w milk fat

In a preferred embodiment of the invention, the milk derivative of step a) comprises at most 0.1% w/w milk fat. An example of such a milk derivative is skim-milk having a fat content in the range of 0.05-0.1% w/w. This embodiment is particularly preferred when the physical separation of step b) involves microfiltration.

In the context of the present invention, when a composition is said to comprise, contain or have X % (w/w) of a specified component, the weight percentage of the specified component is calculated relative to the total weight of the composition unless it is stated otherwise.

In a particularly preferred embodiment of the invention, the milk derivative of step a) comprises lactose-reduced milk. The milk derivative may e.g. consist of lactose-reduced milk.

In the context of the present invention, the term "lactose-reduced milk" relates to a milk comprising at most 0.5 g lactose per kg milk. It may even be preferred that the milk derivative is lactose-free. In the context of the present invention, the term "lactose-free milk" relates to a milk comprising at most 0.05 g lactose per kg milk.

In a preferred embodiment of the invention, the milk derivative of step a) comprises 2.5-4.5% w/w casein, 0.25-1% w/w milk serum protein, and 0.01-3% w/w milk fat. In an even more preferred embodiment of the invention, the milk derivative of step a) comprises 2.5-4.5% w/w casein, 0.25-1% w/w milk serum protein, and 0.01-0.1% w/w milk fat.

The method of the invention may preferably be used for treating fresh milk derivative, i.e. milk derivative based on milk which has recently been milked from the source of the milk derivative, e.g. from cows. For example, it may be preferred that the milk derivative is at most 48 hours old, i.e. at most 48 hours since milking, and more preferably at most 36 hours old, such as at most 24 hours old.

It is preferred that the milk derivative is of good quality and normally the milk derivative comprises at most 100,000 colony forming units (cfu)/mL, preferably at most 50,000 cfu/mL, and even more preferably at most 25,000 cfu/mL. It may even be preferred that the milk derivative comprises at most 10,000 cfu/mL, such as at most 7,500 cfu/mL.

The milk derivative of step a) may comprise one or more additives. For example, the one or more additives may contain a flavour. Useful flavours are e.g. strawberry, chocolate, banana, mango, and/or vanilla.

Alternatively, or in addition, the one or more additives may contain one or more vitamins. Useful vitamins are e.g. vitamin A and/or vitamin D. Other vitamins such as vitamin B, C, and/or E may also be useful.

Alternatively, or in addition, the one or more additives may also contain one or more minerals. An example of a useful mineral is the milk mineral supplement Capolac MM-0525 (Aria Foods Ingredients Amba, Denmark). Another useful additive is whey protein.

In a preferred embodiment of the invention, the milk derivative of step a) has been pasteurised and possibly also homogenized.

Step b) of the present method involves physically separating microorganisms from the milk derivative, and thereby obtaining a partly sterilised milk derivative. This separation actually removes microorganisms from the milk derivative contrary to other sterilisation techniques which only kill the microorganisms and leave the dead microorganisms in the milk.

In the context of the present invention, the term "microorganisms" relates to e.g. bacteria and bacterial spores, yeasts, moulds and fungal spores.

The physical separation may e.g. remove at least 90% of the microorganisms of the milk derivative, preferably at least 95% of the microorganisms, and even more preferably at least 99% of the microorganisms of the milk derivative.

In an embodiment of the invention, the physically separation of step b) involves bactofugation of said milk derivative.

In another embodiment of the invention, the physically separation of step b) involves microfiltration of said milk derivative.

In a preferred embodiment of the invention, the microfiltration is performed using a filter having a pore size in the range of 0.5-1.5 micron, preferably in the range of 0.6-1.4 micron, even more preferably in the range of 0.8-1.2 micron.

These pore size ranges have been found to be advantages as they retain most of the microorganisms of the milk derivative with substantially no alteration of the protein composition of milk derivate.

In an embodiment of the invention, the used microfilter is a cross-flow microfilter.

Suitable microfiltration system can e.g. be found in Tetra Pak Dairy processing Handbook 2003 (ISBN 91-631-3427-6) which is incorporated herein by reference for all purposes.

In yet an embodiment of the invention, the physically separation of step b) involves both bactofugation and microfiltration of said milk derivative.

In an embodiment of the invention, the bactofugation comprises the use of at least one bactofuge, preferably at least two bactofuges in series, and even more preferably at least three bactofuges in series.

The physical separation is preferably performed at, below, or slightly above ambient temperature. Thus, the temperature of the milk derivative may be at most 60 degrees C during the physical separation, e.g, at most 40 degrees C, such as at most 20 degrees C, or at most 10 degrees C.

The temperature of the milk derivative during physical separation may for example be in the range of 2-60 degrees C, and preferably in the range of 25-50 degrees C.

Suitable bactofuges, including one one-phase or two-phase Bactofuges, can e.g. be found in Tetra Pak Dairy processing Handbook 2003 (ISBN 91-631-3427-6) which is incorporated herein by reference for all purposes.

Step c) of the method involves exposing a first composition comprising said partly sterilised milk derivative to a High Temperature (HT)-treatment. The first composition is heated to a temperature in the range of 140 - 180 degrees C, kept or held at that temperature for a period of at most 200 msec, and then finally cooled.

In an embodiment of the invention, the first composition consists of the partly sterilised milk derivative of step a).

However, in another embodiment of the invention, the partly sterilised milk derivative has been added one or more additives, e.g. a milk fat, prior to the HT-treatment and in this case the first composition comprises both the one or more additives (e.g. milk fat) and the partly sterilised milk derivative.

In an embodiment of the invention, the first composition comprises at least 50% (w/w) partly sterilised milk derivative of step b), preferably at least 75% (w/w) partly sterilised milk derivative, and even more preferably at least 85% (w/w) partly sterilised milk derivative. For example, the first composition may comprise at least 90% (w/w) partly sterilised milk derivative of step b), preferably at least 95% (w/w) partly sterilised milk derivative, and even more preferably at least 97.5% (w/w) partly sterilised milk derivative.

The first composition normally comprises water, and may e.g. comprise at least 50% (w/w) water, preferably at least 70% (w/w) water, and even more preferably at least 80% (w/w) water. For example, the first composition may comprise at least 85% (w/w) water, preferably at least 90% (w/w) water, and even more preferably at least 95% (w/w) water.

In a preferred embodiment of the invention, the first composition furthermore comprises one or more lipid sources.

The one or more lipid sources may for example comprise a vegetable fat and/or a vegetable oil. It is furthermore possible that the one or more lipid sources consist of a vegetable fat and/or a vegetable oil. This is typically the case when the milk or milk-related product is a so-called filled milk, i.e. a milk product wherein at least a portion of the original milk fat has been replaced with a non-dairy lipid source such as vegetable oil or vegetable fat.

The vegetable oil may e.g. comprise one or more oils selected from the group consisting of sunflower oil, corn oil, sesame oil, soya bean oil, palm oil, linseed oil, grape seed oil, rapeseed oil, olive oil, groundnut oil and combinations thereof.

If a vegetable fat is desired, the vegetable fat may e.g. comprise one or more fats selected from the group consisting of palm oil-based vegetable fat, palm kernel oil-based vegetable fat, peanut butter, cacao butter, coconut butter, and combinations thereof.

In a preferred embodiment of the invention, the one or more lipid sources comprise(s), or even consist(s) of, a milk fat source.

The milk fat source may e.g. comprise one or more lipid sources selected from the group consisting of a cream, a cream double, an anhydrous butter fat, a whey cream, a butter oil, a butter oil fraction, and combinations thereof.

Production of long shelf life milk typically involves UHT-treatment of the milk fat fraction of the milk. The present inventors have found that even though the UHT-treated milk fat, e.g. cream, only is added to the long shelf life milk in relatively small quantities, it may still contribute to an undesired cooked taste. The present inventors have additionally found that one may expose the milk fat, e.g. cream, to milder thermal treatment, than what is normally done, without losing the long shelf life of the milk.

Thus, in a preferred embodiment of the invention, the one or more lipid sources, e.g. the milk fat source, such as cream, have been heat-treated at a temperature in the range of 70-100 degrees C for a period of 2-200 seconds. For example, the one or more lipid sources may be heat-treated at a temperature in the range of 70-85 degrees C for a period of 100-200 seconds. Alternatively, the one or more lipid sources may be heat-treated at a temperature in the range of 85-100 degrees C for a period of 2-100 seconds.

In another preferred embodiment of the invention, the one or more lipid sources, e.g. the milk fat source, such as cream, have been heat treated at a temperature in the range of 100-180 degrees C for a period of 10 msec.- 4 sec.

For example, the one or more lipid sources may be heat-treated at a temperature in the range of 100-130 degrees C for a period of 0.5-4 seconds. Alternatively, the one or more lipid sources may be heat-treated at a temperature in the range of 130-180 degrees C for a period of 10 msec -0.5 seconds.

Alternatively, the HT-treatment described in the context of step c) may e.g. be used for separate heat-treatment of the one or more lipid sources.

The HT-treatment of step c) involves heating the first composition to a temperature in the range of 140-180 degrees C, preferably 145-170 degrees C, and even more preferably 150-160 degrees C.

In an embodiment of the invention, the HT-treatment of step c) involves heating the first composition to a temperature in the range of 140-170 degrees C, preferably 145-160 degrees C, and even more preferably 150-155 degrees C.

In another embodiment of the invention, the HT-treatment of step c) involves heating the first composition to a temperature in the range of 150-180 degrees C, preferably 155-170 degrees C, and even more preferably 160-165 degrees C.

In yet an embodiment of the invention, the first composition has a temperature in the range of 70-75 degrees C when provided to step C).

The high temperature of the HT-treatment may e.g. vary at most +/- 2 degrees C from the intended temperature, preferably at most +/- 1 degrees C, and even more preferred at most +/- 0.5 degrees C, such as at most +/- 0.25 degrees C.

In a preferred embodiment of the invention, the first composition is kept in the HT-temperature range for a period of at most 200 msec, preferably at most 150 msec, and even more preferably at most 100 msec.

For example the first composition may be kept in the HT-temperature range for a period of 10-200 msec, preferably 25-150 msec, and even more preferably 30-100 msec.

In another embodiment of the invention, the first composition is kept in the HT-treatment temperature range for a period of 10-100 msec, preferably 25- 90 msec, and even more preferably 30-70 msec.

The relationship between the process parameters and the time in which the first composition is kept in the HT-treatment temperature range, sometimes referred to as the "holding time", is typically provided by the equipment manufacturer.

If not, the holding time may be determined as outlined below:

1. Calculate the heat capacity of the feed from the first composition via empirical formulas
2. Calculate the required energy (kg/hour steam) to raise the feed temperature from the preheating temperature to the desired heat treatment temperature
3. Calculate the excess steam (used for transport) by subtracting the required heating steam flow from the total steam flow
4. Determine the exact volume of the holding cell
5. Determine the volumetric flow rates of material into and through the process unit, including any volumetric changes (for example heating steam condensation)
6. Calculate the holding time by dividing the holding cell volume by the volumetric flow rate.

In a preferred embodiment of the invention, the duration of the HT-treatment, including heating, holding, and cooling the first composition, is at most 500 msec, preferably at most 300 msec, and even more preferably at most 200 msec, such as at most 150 msec.

For example, the duration of the HT-treatment, including heating, holding, and cooling the first composition, may be at most 400 msec, preferably at most 350 msec, and even more preferably at most 250 msec, such as at most 175 msec.

The duration of the HT-treatment, including heating, holding, and cooling the first composition, may be calculated as the duration of the period(s) wherein the temperature of the first composition is at least 95 degrees C.

The cooling of step c) preferably cools the first composition to a temperature of at most 90 degrees C, such as at most 70 degrees C. In an embodiment of the invention, the first composition is cooled to a temperature in the range of 2-90 degrees C, preferably in the range of 70-90 degrees C, and even more preferably in the range of 72-85 degrees C.

In a preferred embodiment of the invention, the duration of the cooling of the HT-treatment is at most 50 msec, preferably at most 10 msec, and even more preferably at most 5 msec, such as 1 msec.

The heating of the HT-treatment of step c) must be able to rapidly increase the temperature of the first composition. Such rapid temperature increases may be accomplished by contacting the first composition with steam. Thus, in a preferred embodiment of the invention, the heating of the HT-treatment is performed by contacting the first composition with steam. There are different techniques available for contacting the first composition with steam. One of these is direct steam injection which steam is injected into the liquid to be heated. Another technique is steam infusion wherein the liquid is infused into a steam-filled chamber.

The temperature of the steam is typically somewhat higher than the desired treatment temperate of the HT-treatment, for example at most 10 degrees C higher than the desired treatment temperate of the HT-treatment, preferably at most 5 degrees C higher, an even more preferred at most 3 degrees C higher.

For example, the heating of the HT-treatment may comprise contacting the first composition with steam, and it should be noted that other energy sources may contribute to the heating as well.

In an embodiment of the invention, the heating of the HT-treatment comprises, or consists of, exposing the first composition to electromagnetic energy. Examples of useful electromagnetic energy are IR radiation and/or microwave radiation.

It is also important that the heated first composition is rapidly cooled as part of the HT-treatment, and in a preferred embodiment of the invention, the cooling of the HT-treatment comprises, or consists of, flash cooling.

In the context of the present invention, the term "flash cooling" is the cooling obtained by introducing, e.g. spraying, a hot liquid or aerosol into a vacuum chamber, whereby parts of the liquid evaporates and rapidly cools the remaining liquid.

Examples of useful HT-treatment systems are e.g. the Saniheat™-system Gea Niro (Denmark), the Linient Steam Injection (LSI™)-system of Gea Niro (Denmark) or the Instant Infusion System (IIS) of Invensys APV (Denmark).

Example for useful HT-treatment systems are e.g. found in the international patent applications WO 2006/123,047 A1 and WO 98/07,328, which both are incorporated herein by reference for all purposes.

General aspects of high temperature treatment are e.g. found in "Thermal technologies in food processing" ISBN 185573558 X, which is incorporated herein by reference for all purposes.

The packaging of step d) may be any suitable packaging techniques and any suitable container may be used for packaging the milk or milk-related product of the invention.

However, in a preferred embodiment of the invention, the packaging of step d) is aseptic packaging, i.e. the milk or milk-related product is packaged under aseptic conditions. For example, the aseptic packaging may be performed by using an aseptic filling system, and it preferably involves filling the milk into one or more aseptic container(s).

Examples of useful containers are e.g. bottles, cartons, bricks, and/or bags.

The packaging is preferably performed at or below room temperature. Thus, the temperature of the second composition is preferably at most 30 degrees C during the packaging, preferably at most 25 degrees C and even more preferably at most 20 degrees C such as at most 10 degrees C.

The temperature of the second composition during packaging may for example be in the range of 2-30 degrees C, and preferably in the range of 5-25 degrees C.

In an embodiment of the invention, the second composition comprises at least 50% (w/w) HT-treated first composition of step c), preferably at least 75% (w/w) HT-treated first composition of step c), and even more preferably at least 85% (w/w) HT-treated first composition of step c). For example, the second composition may comprise at least 90% (w/w) HT-treated first composition of step c), preferably at least 95% (w/w) HT-treated first composition of step c), and even more preferably at least 97.5% (w/w) HT-treated first composition of step c).

The second composition normally comprises water, and may e.g. comprise at least 50% (w/w) water, preferably at least 60% (w/w) water, and even more preferably at least 70% (w/w) water. For example, the second composition may comprise at least 75% (w/w) water, preferably at least 80% (w/w) water, and even more preferably at least 85% (w/w) water.

In a preferred embodiment of the invention, the second composition comprises at least 90% (w/w) water.

Additionally, the second composition may contain the same additives as the milk derivative and/or the first composition.

For long shelf life milk products, undesired enzyme activity may be just as problematic as microbial growth, and it is therefore preferred that the method of the invention also comprises an enzyme inactivation step.

In a preferred embodiment of the invention, said enzyme inactivation step comprises keeping the liquid to be treated at a temperature in the range of 70-90 degrees C for a period in the range of 30-500 seconds.

For example the liquid may be kept at a temperature in the range of 70-80 degrees C for a period in the range of 30-500 seconds, preferably 40-300 seconds, and even more preferably 50-150 seconds.

In a preferred embodiment of the invention, the liquid is kept at a temperature in the range of 70-75 degrees C for a period in the range of 30-500 seconds, preferably 40-300 seconds, and even more preferably 50-150 seconds.

Alternatively the liquid may be kept at a temperature in the range of 80-90 degrees C for a period in the range of 10-200 seconds, preferably 25-100 seconds, and even more preferably 10-50 seconds.

Such a temperature treatment has proven to reduce of the activity of enzymes such as plasmin as well as pro-enzymes such as plasminogen.

The enzyme inactivation step should preferably reduce the combined activity of plasmin and plasminogen of the treated liquid by at least 60% relative to the activity of the untreated liquid, preferably by at least 65% and even more preferably by at least 70%.

The combined activity is a measure of the activity of plasmin in the milk or milk-related product plus the activity that can be gained from converting plasminogen into plasmin. The combined activity is determined according to analysis G of Example 3.

Some embodiments of the invention require even lower levels of combined plasmin and plasminogen activity, and for such embodiments the enzyme inactivation step should preferably reduce the combined activity of plasmin and plasminogen of the treated liquid by at least 80% relative to the activity of the untreated liquid, preferably by at least 85% and even more preferably by at least 90%.

In preferred embodiments of the invention, the enzyme inactivation step should reduce the combined activity of plasmin and plasminogen of the treated liquid by at least 95% relative to the activity of the untreated liquid, preferably by at least 97.5% and even more preferably by at least 99%.

In an embodiment of the invention, the combined activity of plasmin and plasminogen of the milk or milk-related product is at most 8.000 microUnits/mL, preferably at most 5.000 microUnits/mL and even more preferably at most 3.000 microUnits/mL.

In the context of the present invention, a plasmin activity of one Unit (U) is the plasmin activity which can produce 1 micromol p-Nitroaniline per minut at 25 degrees C, pH 8.9, using Chromozyme PL (Tosyl-Gly-Pro-Lys-4-nitranilide acetat) as substrate.

In another embodiment of the invention, the combined activity of plasmin and plasminogen of the milk or milk-related product is at most 2.500 microUnits/mL, preferably at most 1.000 microUnits/mL and even more preferably at most 750 microUnits/mL. It may even be preferred that the combined activity of plasmin and plasminogen of the milk or milk-related product is at most 600 microUnits/mL, preferably at most 400 microUnits/mL, and even more preferably at most 200 microUnits/mL.

The enzyme inactivation step may be performed during different stages of the method, for example, before the physical separation of microorganisms, before the HT-treatment, and/or before the packaging.

In an embodiment of the invention, the first composition is exposed to the enzyme inactivation step prior to step c).

In another embodiment of the invention, the second composition is exposed to the enzyme inactivation step prior to step d).

Yet an embodiment of the invention relates to method for producing a milk or milk-related product, the method comprising the steps of:

a) providing a milk derivative comprising at least 95% (w/w) skim milk, said milk derivate comprising at most 0.1 % (w/w) milk fat,
b) microfiltering said milk derivative using a microfilter pore size of 0.8-1.2 micron, thus obtaining a partly sterilised milk derivative,
b1) mixing the partly sterilised milk derivative with a suitable amount of pasteurised cream,
b2) adjusting the temperature of the product of step b1) to a temperature in the range of 72-75 degrees C for a period of 30-300 secs.
c) exposing a first composition comprising at least 95% (w/w) of the product of step b2) to a HT-treatment, wherein the first composition is heated to a temperature in the range of 140 - 180 degrees C, kept at that temperature for a period of at most 200 msec, and then finally cooled,
d) aseptically packaging a second composition comprising at least 95% (w/w) of the heat treated first composition.

Another embodiment of the invention relates to method for producing a milk or milk-related product, the method comprising the steps of:

a) providing a milk derivative comprising at least 95% (w/w) skim milk, said milk derivate comprising at most 0.1 % (w/w) milk fat,
b) microfiltering said milk derivative using a microfilter pore size of 0.8-1.2 micron, thus obtaining a partly sterilised milk derivative,
b1) mixing the partly sterilised milk derivative with a suitable amount of pasteurised cream,
b2) adjusting the temperature of the product of step b1) to a temperature in the range of 75-85 degrees C for a period of 30-300 secs.
c) exposing a first composition comprising at least 95% (w/w) of the product of step b2) to a HT-treatment, wherein the first composition is heated to a temperature in the range of 140 - 180 degrees C, kept at that temperature for a period of at most 200 msec, and then finally cooled,

d) aseptically packaging a second composition comprising at least 95% (w/w) of the heat treated first composition.

Another aspect of the invention relates to a milk or milk-related product obtainable by the method of the invention. For example, the milk or milk-related product may be the HT-treated first compositions of step c) or alternatively, it may be the packaged second composition of step d).

An additional aspect of the invention relates to a milk or milk-related product as such, preferably having a long shelf life and low level of cooked taste.

Yet an aspect of the invention relates to a packaged milk or milk-related product, e.g. obtainable by the method as described herein. The milk or milk-related product may be packaged in a container as described herein.

The shelf life of a product is typically described as the time for which the product can be stored without the quality falling below a certain minimum acceptable level. This is not a very sharp and exact definition and it depends to a large extent on the perception of "minimum acceptable quality".

In the context of the present invention, the term "shelf life" means the time in which the milk or milk-related product can be stored, hermetically sealed, at a specific temperature before an undesirable event occurs.

In an embodiment of the invention, the undesirable event is that the milk or milk-related product is found to be non-sterile. A non-sterile milk or milk-related product is a product which does not contain microorganisms capable of growing in the product at normal non-refrigerated conditions at which the food is likely to be held during manufacture, distribution and storage. Non-sterility and microbial presence or growth may e.g. be detected according to Marth, E. H., ed. 1978. in Standard methods for the examination of dairy products. Am. Publ. Health Assoc., Washington, DC.

Hydrophobic peptides, which are products of proteolytic degradation of milk proteins, are known to give rise to an undesirably bitter taste. Thus, in an embodiment of the invention, the undesirable event is that the milk or milk-related product is found to contain at least 1 mg/L hydrophobic peptides having a molar weight in the range of 500-3000 g/mol, such as at least 20 mg/L, or such as at least 50 mg/L hydrophobic peptides having a molar weight in the range of 500-3000 g/mol.

In another embodiment of the invention, the undesirable event is that the milk or milk-related product is found to contain at least 100 mg/L hydrophobic peptides having a molar weight in the range of 500-3000 g/mol, such as at least 200 mg/L, or such as at least 500 mg/L hydrophobic peptides having a molar weight in the range of 500-3000 g/mol.

In a further embodiment of the invention, the undesirable event is that the milk or milk-related product is found to contain at least 750 mg/L hydrophobic peptides having a molar weight in the range of 500-3000 g/mol, such as at least 1000 mg/L, or such as at least 2000 mg/L hydrophobic peptides having a molar weight in the range of 500-3000 g/mol.

The concentration of hydrophobic peptides having a molar weight in the range of 500-3000 g/mol of the milk or milk-related product is determined as described in Kai-Ping et al, J. Agric. Food Chem. 1996, 44, 1058-1063. The milk or milk-related product is used as sample and, following Kai-Ping et al., the obtained 500-3000 g/mol molecular weight fraction is subsequently analysed via analytical HPLC on a C18 column. The resulting chromatogram is used to determine the concentration of hydrophobic peptides having a molar weight in the range of 500-3000 g/mol of the milk or milk-related product.

In yet an embodiment of the invention, the undesirable event is that the milk or milk-related product is found to have an undesirable sensory property using sensory testing according to ISO 22935-1:2009, ISO 22935-2:2009, and ISO 22935-3:2009 which relate to sensory analysis of milk and milk products. Sensory properties such as visual appearance, consistency, odour, and taste are preferably tested.

It is preferred to combine two or more of the different types of undesirable events for the determination of shelf life.

Thus, in a preferred embodiment of the invention, the shelf life is determined by the first occurrence of an undesired event selected from the group consisting of:

- the milk or milk-related product is found to be non-sterile, and
- the milk or milk-related product is found to contain at least 1 mg/L hydrophobic peptides having a molar weight in the range of 500-3000 g/mol.

In another preferred embodiment of the invention, the shelf life is determined by the first occurrence of an undesired event selected from the group consisting of:

- the milk or milk-related product is found to be non-sterile,
- the milk or milk-related product is found to contain at least 1 mg/L hydrophobic peptides having a molar weight in the range of 500-3000 g/mol, and
- the milk or milk-related product is found to have an undesirable sensory property.

In yet a preferred embodiment of the invention, the shelf life is determined by the first occurrence of an undesired event selected from the group consisting of:

- the milk or milk-related product is found to be non-sterile, and
- the milk or milk-related product is found to have an undesirable sensory property.

In an embodiment of the invention, the shelf life of said milk or milk-related product is at least 30 days, when kept at 25 degrees C.

In another embodiment of the invention, the shelf life of said milk or milk-related product is at least 49 days, when kept at 25 degrees C the first 21 days after packaging and at 5 degrees C the subsequent time.

In a further embodiment of the invention, the shelf life of said milk or milk-related product is at least 49 days, when kept at 25 degrees C the first 21 days after packaging and at 5 degrees C the subsequent time.

In yet an embodiment of the invention, the shelf life of said milk or milk-related product is at least 70 days, when kept at 5 degrees C.

In an additional embodiment of the invention, the shelf life of said milk or milk-related product is at least 119 days, when kept at 25 degrees C.

In another embodiment of the invention, the shelf life of said milk or milk-related product is at least 182 days, when kept at 25 degrees C.

The milk or milk-related product of the invention appears to have a relatively low content of denatured beta-lactoglobulin. Preferably, at most 40% (w/w) of the beta-lactoglobulin of the milk or milk-related product is denatured relative to the total amount of both denatured and non-denatured beta-lactoglobulin, preferably at most 35% (w/w), and even more preferably at most 30% (w/w).

In preferred embodiments of the invention, at most 30% (w/w) of the beta-lactoglobulin of the milk or milk-related product is denatured relative to the total amount of both denatured and non-denatured beta-lactoglobulin, preferably at most 25% (w/w), and even more preferably at most 20% (w/w The degree of denaturation is measured according to Analysis C of Example 3.

In an embodiment of the invention, the milk or milk-related product comprises at most 60% w/w milk fat. An example of such a milk or milk-related product is cream double.

In another embodiment of the invention, the milk or milk-related product comprises at most 40% w/w milk fat. An example of such a milk or milk-related product is whipping cream.

In yet an embodiment of the invention, the milk or milk-related product comprises at most 20% w/w milk fat. An example of such a milk or milk-related product is table cream containing 18% w/w milk fat.

In a further embodiment of the invention, the milk or milk-related product comprises at most 4% w/w milk fat. An example of such a milk or milk-related product is full fat milk which typically contains 2-4% w/w milk fat, and preferably approx. 3% w/w milk fat.

In a further embodiment of the invention, the milk or milk-related product comprises at most 1.5 w/w milk fat. An example of such a milk or milk-related product is semi-skim milk which typically contains 0.7-2% w/w milk fat, and preferably 1-1.5% w/w milk fat.

In an additional embodiment of the invention, the milk or milk-related product comprises at most 0.7 w/w milk fat. An example of such a milk or milk-related product is skim milk which normally contains 0.1-0.7% w/w milk fat, and preferably 0.3-0.6% w/w milk fat, such as approx. 0.5% w/w milk fat

In a preferred emboediment of the invention, the milk or milk-related product comprises at most 0.1% w/w milk fat. An example of such a milk or milk-related product is skim-milk having a fat content in the range of 0.05-0.1% w/w.

In yet a preferred embodiment of the invention, the milk or milk-related product comprises 2.5-4.5% w/w casein, 0.25-1% w/w milk serum protein, and 0.01-3% milk fat. In an even more preferred embodiment of the invention, the milk or milk-related product comprises 2.5-4.5% w/w casein, 0.25-1% w/w milk serum protein, and 0.01-0.1% milk fat.

The milk or milk-related product normally comprises water, and may e.g. comprise at least 60% (w/w) water, preferably at least 70% (w/w) water, and even more preferably at least 80% (w/w) water. For example, the milk or milk-related product may comprise at least 85% (w/w) water, preferably at least 87.5% (w/w) water, and even more preferably at least 90% (w/w) water.

The milk or milk-related product may furthermore contain any of the additives mentioned herein.

An additional aspect of the invention relates to a milk processing plant for converting a milk derivative to a milk or milk-related product having a long shelf life, said plant comprising

- a physical separation section adapted to remove microorganims from the milk derivative,

- a HT-treatment section in fluid communication with said physical separation section, which HT-treatment section is adapted to heat the liquid product of the physical separation section to a temperature in the range of 140-180 degrees C for a period of at most 200 msec. and subsequently cool the liquid product, and

- a packaging section in fluid communications with the HT-treatment section for packaging the product of the milk processing plant.

In the context of the present invention, the term "fluid communication" means that the sections which are in fluid communication are so arranged that that liquid can be moved from one section to the other. This is typically implemented by interconnecting the relevant sections of the plant with pipes, and pumps and/or valves.

The milk processing plan is suitable for implementing the method of the present invention.

The physical separation section may e.g. contain one or more of the microfiltration systems mentioned herein, and alternatively or in addition, it may contain one or more of the bactofuges mentioned herein.

The HT-treatment section may comprise one or more of the HT treatment systems mentioned herein and the packaging section will typically contain a commercially available packaging or filling system.

In addition to the above-mentioned sections, the milk processing plant may contain pumps, valves, piping, homogeniser, heater, etc. which all are well-known units for the person skilled in the art and are commercially available as well.

Yet an aspect of the invention relates to the use of a combination of physical separation of microorganisms and HT-treatment of a milk derivative to reduce the cooked flavour of the resulting milk or milk-related product.

An exemplary embodiment of the invention relates to an ESL milk or milk-based product with the same taste, odour, and appearance as the corresponding low pasteurised, fresh product. In one exemplary embodiment, the invention provides a process for the production of ESL milk or milk-derived product using APV-IIS heat treatment at high temperatures (110-150 degrees C) and short holding time (less than 0.1 sec.) to minimize chemical, physical, and sensory changes to the heat-treated product.

In a second exemplary embodiment, the invention provides a process for the production of ESL milk or milk-derived product using APV-IIS heat treatment at high temperatures (110 degrees C) at a holding time of less than 0.1 sec. combined with a microfiltration or low pasteurisation step to minimize chemical, physical, and sensory changes to the heat-treated product.

In a first exemplary embodiment the invention provides a milk or milk-related product with an extended shelf life (ESL) characterised by: a) shelf life in the range of 20 days to 6 months, and b) a lactulose content of at most 30 mg/ml and/or, c) a furosine content of at most 40 mg/l and/or d) a 2-heptanone content of at most 15 mg/l and/or e) a 2-nonanone content of at most 25 mg/l.

In one exemplary aspect, the milk or milk-related product may have a shelf life in the range of 4 to 6 months, when stored at a temperature of no more than 35 degrees C.

In a second exemplary aspect, the milk or milk-related product may have a shelf life in the range of 20 days to 60 days when stored at a temperature of no more that 8 degrees C.

In a third exemplary aspect the milk or milk-derived product is produced by a heat treatment process comprising heating the milk or milk-derived product with direct injection of steam at a temperature of 140 to 160 degrees C, preferably 150 degrees C, for a holding time of at most 90 msec., more preferably between 25 and 75 msec.

In a fourth exemplary aspect the milk or milk-derived product is produced by a heat treatment process, wherein the heat treatment process is proceeded by a pre-treatment comprising: a) microfiltration or b) pasteurization or c) bactofugation or a combination thereof.

In yet an exemplary embodiment, the invention relates to a method for producing the milk or milk-related product, by a heat-treatment process comprising the step of treating the milk or milk-related product with direct injection of steam at a temperature of 140 to 160 degrees C, preferably 150 degrees C, with a holding time of 90 msec or less, more preferably between 25 and 75 msec.

The method according to this exemplary embodiment is produced by a heat treatment process, wherein the heat treatment process is proceeded by a pre-treatment comprising: a) microfiltration or b) pasteurization or c) bactofugation or a combination thereof.

In a third exemplary embodiment, the invention relates the use of a heat-treatment process comprising a direct injection of steam at a temperature of 140 to 160 degrees C, preferably 150 degrees C, with a holding time of 90 msec or less, more preferably between 25 and 75 msec for producing a milk or milk-related product.

The use according to this third exemplary embodiment uses a heat treatment process, wherein the heat treatment process is proceeded by a pre-treatment comprising: a) microfiltration or b) pasteurization or c) bactofugation or a combination thereof.

An exemplary aspect of the present invention provides a milk or milk-related product with an extended shelf life (ESL) where the product retains most of the nutritional and organoleptic properties of raw milk, while being sterile or at least having a significantly reduced microbiological content (viable spore count). The improved properties of the ESL product are obtained without the use of additives (for example inhibitors of milk staling) and do not depend on the use of irradiation sterilisation. The milk or milk-related product, according to one exemplary embodiment of the present invention, has an extended shelf life comparable to that of UHT milk, such that it can be consumed up to 6 months after manufacture, while retaining the desirable flavour of fresh milk. According to another exemplary embodiment, the milk or milk-related product has an extended shelf life of between 20 and 60 days, while retaining the desirable flavour of fresh milk.

Milk secreted by healthy cows is basically sterile, but the introduction of bacteria into milk from a variety of sources, including exterior and interior of the udder, soil, bedding, manure, milking equipment and storage tanks, is generally unavoidable. Although, according to Pasteurized Milk Ordinance (PMO) standards, the total bacterial count (TBC) of Grade A raw milk for an individual producer should not exceed 100,000 cfu/mL (FDA, 2001, Grade "A" Pasteurized Milk Ordinance., U.S. Dept. of Health and Human Services, Public Health Service. Publication No. 229. Washington, DC.), an ideal specification for the bacterial count is < 7500. Following pasteurisation, the recommended bacterial count should not exceed 20,000 cfu/ml. After UHT processing, e.g. at 149 degrees C for 3 seconds, no microorganism/spore is capable of survival, as measured by standard plate count tests (Gillis et al., J Dairy Sci.1985 2875-9).

The extended shelf life of the milk or milk-related product of the present invention is due to low residual level of viable microorganisms. When measured immediately following processing and packaging (under aseptic conditions) the product has a viable spore count, measured as colony forming units/millilitre (cfu/ml) of at most 1,000 cfu/ml, more preferably 500 cfu/ml, 100 cfu/ml, 50 cfu/ml, 10 cfu/ml, 1 cfu/ml or <1 cfu/ml. Preferably the product has a viable spore count between 0 and 1,000 cfu/ml, more preferably between 0 and 100 cfu/ml, 0 and 50 cfu/ml, or 0 and 10 cfu/ml.

In a preferred embodiment of the invention, the the milk or milk-related product contains 0 cfu/ml.

Suitable methods for determining the viable spore count in milk or milk-derived products are known in the art: For example standard plate count tests are described by Marth, E. H., ed. 1978. in Standard methods for the examination of dairy products. Am. Publ. Health Assoc., Washington, DC. According to a standard method, milk samples are plated on a medium of Milk Agar (Oxoid), and colonies are counted after 3 d incubation at 30 degrees C (Health protection agency (2004) Plate count test at 30 degrees C. National Standard Method D2 IISue 3, www.hpa-standardmethods.org.uk/pdf sops.asp. Alternatively, spore counts can be determined by direct microscopic count using bright-field microscopy and Thoma counting chamber procedures.

Many volatile compounds generated during the thermal processing of milk have been associated with cooked, stale, and sulfurous notes in milk and are considered as off-flavours by most consumers. Heat treatment is known to be the direct cause of Type 2 reactions leading to off-flavour compounds, such as aldehydes, methyl ketones, and various sulfur compounds, which are barely detectable in the raw milk.

Levels of total ketones detected in raw milk (circa 6 microgram and 11 microgram total ketones per kg of 1% and 3% raw milk respectively) and pasteurised milk are not significantly different, but may be increased by as much as 12 fold in UHT milk (circa 78 microgram and 120 microgram total ketones per kg of 1% and 3% UHT milk respectively). The major ketone contributors are 2-heptanone and 2-nonanone, whose concentration is 34 and 52 times higher, respectively, in UHT milk than in raw and pasteurized samples. These levels correspond to circa 22 microgram and 34 microgram 2-heptanone per kg of 1% and 3% UHT milk respectively; and circa 35 microgram and 53 microgram 2-nonanone per kg of 1% and 3% UHT milk respectively) The other contributors are 2,3-butanedione, 2-pentanone, and 2-undecanone.

Since aroma impact is not only dependent on concentration, but also on sensory threshold, the odour activity value (OAV = concentration/sensory threshold) must be taken into account. The calculated odour activity values reveal that 2,3-butanedione, 2-heptanone, 2-nonanone, 2-methylpropanal, 3-methylbutanal, nonanal, decanal, and dimethyl sulfide are important contributors to the off-flavour of UHT milk.

In some exemplary embodiments of the invention, the natural organoleptic properties of raw/pasteurised milk are preserved in the ESL milk or milk-related product of the present invention due to the low level of volatile off-flavor compounds in the product. In particular the milk product obtained immediately following processing and packaging (under aseptic conditions) contains a detectable total ketone level measured in units of microgram total ketone per kg of 1% fat (or 3% fat) milk of at most 60 (100), more preferably at most 50 (80), 40 (60), 30 (40), 20 (20) and 10 (10) microgram total ketone. Preferably, the detectable total ketone level measured in units of microgram total ketone per kg of 1% fat (or 3% fat) milk lies within the range of between 6 - 60 (8 - 100), more preferably 6 - 50 (8 - 80), 6 - 40 (8 - 60), 6 - 30 (8 - 40), 6 -20 (8 - 20) or 6 -10 (8 - 10) microgram total ketone.

In some exemplary embodiments of the invention, the milk product obtained immediately following processing and packaging (under aseptic conditions) contains a detectable 2-heptanone level measured in units of microgram total 2-heptanone per kg of 1% fat (or 3% fat) milk of at most 15 (25), more preferably at most 10 (20), 7 (15), 5 (10) or 2 (5) microgram 2-heptanone. Preferably, the detectable 2-heptanone level measured in units of microgram total ketone per kg of 1% fat (or 3% fat) milk lies within the range of between 1 - 15 (1 - 25), more preferably 1 - 10 (1 - 20), 1 - 7 (1 - 15), 1 - 5 (1 - 10) or 1 -3 (1 - 5) microgram 2-heptanone.

In some exemplary embodiments of the invention, the milk product obtained immediately following processing and packaging (under aseptic conditions) contains a detectable 2-nonanone level measured in units of microgram total 2-nonanone per kg of 1% (or 3%) milk of at most 25 (40), more preferably at most 20 (30), 15 (25), 10 (15) or 5 (10) microgram 2-nonanone. Preferably, the detectable 2-nonanone level measured in units of microgram 2-nonanone per kg of 1% fat (or 3% fat) milk lies within the range of between 0.2 - 25 (0.2 - 40), more preferably 0.2 - 20 (0.2 - 30), 0.2 - 15 (0.2 - 25), 0.2 - 10 (0.2 - 15) or 0.2 -5 (0.2 - 10) microgram 2-nonanone.

Headspace solid-phase microextraction (HSSPME) combined with gas chromatography provides a fast and reliable technique for the extraction and quantitative analysis of volatile components in dairy foods (P. A. Vazquez-Landaverde et al., 2005 J. Dairy Sci. 88:3764-3772). For example, mass spectra of milk volatiles can be obtained using an Agilent 6890 gas chromatograph equipped with a 5973 quadrupole mass analyzer detector (Agilent Technologies, Inc., Wilmington, DE). The SPME fiber is exposed to the headspace of 20 g of a milk sample in a 40-mL amber glass vial for 3 h at 35 degrees C and then inserted in the GC-mass spectroscopy injection port for 5 min under splitless conditions. A DB-5 capillary column (30 m x 0.32 mm i.d., 1-microm film thickness; J&W Scientific, Folsom, CA) provides chromatographic separation. The oven temperature program is maintained at 35 degrees C for 8 min, increased to 150 degrees C at a rate of 4 degrees C /min, then increased to 230 degrees C at a rate of 20 degrees C/min, and finally held at 230 degrees C for 20 min. Helium is used as the carrier gas at 2.5 mL/min. The injector, detector transfer line, and ion source temperatures are 250, 280, and 230 degrees C, respectively. Electron impact ionization at a voltage of 70 eV and m/z range of 35 to 350 is collected at 4.51 scans/s. The instrument control and data analysis is performed using enhanced ChemStation software (Agilent Technologies, Inc.). The volatile compounds in milk are identified by comparing mass spectra and retention times with those of authentic compounds.

Heat treatment of milk is the cause of Type 1 reactions leading to the denaturation, degradation, and inactivation of whey proteins, enzymes, and vitamins. The Maillard reaction plays a key role in such Type 1 reactions. This reaction can be monitored by measuring the furosine (epsilon-N-2-furoylmethyl-L-lysine) and lactulose (4-0-beta-galactopyranosyl-D-fructose) levels and the furosine/lactulose ratio in a product. The furosine content of pasteurised milk is generally between 1.0 and 2.0 mg/liter milk, while levels in UHT depend on the heating conditions, but levels of about 56 mg/liter are reported in normal UHT. The lactulose content of normal UHT is reported to be in the range of 34 -42 mg/ml.

The nutritional properties of raw/pasteurised milk are preserved in the ESL milk or milk-related product of some exemplary embodiments of the present invention as indicated by the low level of furosine and/or lactulose in the milk. In particular the milk product obtained immediately following processing and packaging (under aseptic conditions) may contain a detectable level of furosine measured in units of mg/liter milk of at most 40 mg/liter milk product, more preferably at most 30, 20, 10, or 5 mg/liter. Preferably, the detectable furosine level measured in units of mg furosine per liter of milk product lies within the range of between 0 - 30 mg/liter, more preferably 0 - 20, 0 - 10, or 0 - 5 mg/liter furosine.

Alternatively, the furosine level measured in units of mg furosine per liter of the milk product may be within the range of between 0 - 100 mg/liter, preferably in the range of 0 - 75 mg/liter, and even more preferably in the range of 0 - 50 mg/liter.

Similarly, the milk product obtained immediately following processing and packaging (under aseptic conditions) contains a detectable level of lactulose measured in units of mg/milliliter (ml) milk of at most 30 mg/ml milk product, more preferably at most 20, 10, 5, or 2 mg/ml. Preferably, the detectable lactulose level measured in units of mg lactulose per ml of milk product lies within the range of between 0 - 30 mg/ml, more preferably 0 - 20, 0 - 10, 0 - 5 or 0 - 2 mg/ml lactulose.

Although fat-soluble vitamins in milk are minimally affected by heat treatment, the water-soluble vitamins can be partially destroyed. Consequently UHT processing reduces B vitamins by 10%, folic acid by 15%, and vitamin C by 25%. The ESL milk of some exemplary embodiments of the present invention has a vitamin C content that is reduced by less than 20% during production processing.

Hydroxymethylfurfural (HMF) is a recognised marker of heat-damaged milk, where levels of HMF in UHT milk are reported to range from 4 - 16 micromol/l. Singh et al., Lait (1989) 69 (2) 131-136. An ESL milk or milk-related product obtained immediately following processing and packaging (under aseptic conditions) contains a detectable level of HMF measured in units of 1 micromol /L milk at most 6 micromol/l HMF, more preferably at most 5, 4, 3, 2 or 1 micromol/L HMF. Preferably, the detectable HMF level measured in units of micromol HMF per l of milk product lies within the range of between 0 - 6 micromol/l, more preferably 0 - 5, 0 - 4, 0 - 3 or 0 - 2 micromol/l.

Methods for determining furosine and lactulose levels in milk or milk-derived products are known in the art: Both HPLC or enzymatic assays, as well as front-face fluorescence spectroscopy methods are described by Kulmyrzaev et al., 2002 in Lait 82: 725-735. Methods for determining HMF levels in milk are described by Singh et al., Lait (1989) 69 (2) 131-136.

Heat treatments with high temperatures (such as 110, 120, 130, 140 or 150 degrees C or any temperature between) and extremely short holding times of less than 0.1 sec., (such as 0.02 sec., 0.05 sec, 0.09 sec. or any time between) produce an ESL milk with high bacteriological quality, and reduced chemical and sensory changes compared to standard UHT milk. This milk can be produced by direct steam injection, using a commercial plant designed for ultra short product-steam contact times. One such plant is the APV Instant Infusion System (APV-IIS). Another such plant is the GEA NIRO Saniheat™.

In an exemplary embodiment of the above-described method (characterised by a heat treatment of the milk at a temperature of at least 150 degrees C, for a period of between 25 and 80msec), the milk or milk-related product is subjected to a pre-treatment step. This pre-treatment can be either a microfiltration step, a low pasteurisation step, or a bactofugation step, or any combination thereof, which is performed prior to the above HT-treatment, such as a APV-IIS-type treatment . This pre-treatment step (microfiltration, and/or pasteurisation, and/or bactofugation) serves to lower the microbial load (including spore count) in the milk product prior to HT-treatment. Further, such combined treatment provides a milk product with a shelf life comparable to that of UHT milk while retaining the fresh flavour of fresh milk, since the treatment is more lenient and avoids the generation of off-flavors that characterises UHT milk.

Where the pre-treatment employs a microfiltration step, this may be performed with a low transmembrane-pressure membrane process capable of separating colloidal and suspended particles in the range of 0.05-10 microns. Where the pre-treatment employs a pasteurisation step, this may be performed by heating at a temperature of 71-74 degrees C for 15 - 30 secs. Preferably this pasteurisation step is conducted at 72 degrees C for 15 secs, also known as a High Temperature Short Time (HTST) pasteurisation.

Where the pre-treatment employs a bactofugation step, this may be performed with a centrifuge designed to separate micro-organisms from milk. Suitable equipment for centrifugation includes a one-phase or two-phase Bactofuge (Tetra Pak Dairy processing Handbook 2003 ISBN 91-631-3427-6). Bacteria and particularly bacterial heat-resistant spores have a higher density than milk.

The process of the present invention may be used for sterilizing any milk derivate, i.e., "starting material". In an embodiment of the invention, the starting material is preferably fresh whole milk or skim milk. In an alternate embodiment of the invention, the starting material is preferably cow's milk, preferably with a pH of 6.4 to 6.8 and a titratable acidity of 0.13 - 0.15%.

In some embodiments of the invention, the resulting milk product, produced by a combination of at least a microfiltration and a HT-treatment step, has an extended shelf life (ESL) and it tastes, smells, and appears substantially the same as the corresponding low pasteurised, fresh product. The Saniheat™ treated or IIS-treated product is characterized by one or more of:

1. Extended shelf life, and
2. The same taste, smell, and appearance as the corresponding low pasteurised, fresh product, and preferably a
3. Low degree of whey protein denaturation.
4. Low hydroxymethylfurfural (HMF) content.
5. Low Lactulose content.
6. Low Maillard reaction product content.
7. Reduced loss of lysine due to Maillard reactions.

Below, additional exemplary embodiments of the invention are described.

Exemplary embodiment 1: A milk or milk-related product with an extended shelf life (ESL) characterised by:

a. a shelf life in the range of 20 days to 6 months, and
b. a lactulose content of at most 30 mg/ml and/or
c. a furosine content of at most 40 mg/l and/or
d. a 2-heptanone content of at most 15 mg/l and/or
e. a 2-nonanone content of at most 25 mg/l.

Exemplary embodiment 2: The milk or milk-related product of exemplary embodiment 1 when the shelf life is the range of 4 to 6 months, when stored at a temperature of no more than 35 degrees C.

Exemplary embodiment 3: The milk or milk-related product of Exemplary embodiment 1, when the shelf life is the range of 20 days to 60 days when stored at a temperature of no more that 8 degrees C.

Exemplary embodiment 4: The milk or milk-related product of claim Exemplary embodiment 1, having a spore content of at most 10 cfu/ml.

Exemplary embodiment 5: The milk or milk-related product of Exemplary embodiment 2, having a spore content of at most 1000 cfu/ml.

Exemplary embodiment 6: The milk or milk-related product of Exemplary embodiment 1, having an HMF content of at most 6 micromol/liter.

Exemplary embodiment 7: The milk or milk-related product of any of the exemplary embodiments 1 - 6, produced by a heat treatment process comprising heating the milk or milk-derived product with direct injection of steam at a temperature of 140 to 160 degrees C, preferably 150 degrees C, for a holding time of at most 90 msec., more preferably between 25 and 75 msec.

Exemplary embodiment 8: The milk or milk-derived product of exemplary embodiment 7, wherein the heat treatment process is proceeded by a pre-treatment comprising:

a. microfiltration or

b. pasteurization or

c.bactofugation or

a combination thereof.

Exemplary embodiment 9: The milk or milk-related product of exemplary embodiment 8, where the microfiltration employs at membrane-filter having a pore size of 0.87 $\mu$m or less.

Exemplary embodiment 10: The milk or milk-related product of exemplary embodiment 8, where the pasteurisation comprises heating to 72 degrees C for 15 secs.

Exemplary embodiment 11: The milk or milk-related product of Exemplary embodiment 7 or 8, wherein the steam is injected into a chamber comprising a inner surface composed of a non-burning material, preferably a ceramic material.

Exemplary embodiment 12: A method for producing the milk or milk-related product of any of the exemplary embodiments 1 - 6, by a heat-treatment process comprising the step of treating the milk or milk-related product with direct injection of steam at a temperature of 140 to 160 degrees C, preferably 150 degrees C, with a holding time of 90 msec or less, more preferably between 25 and 75 msec.

Exemplary embodiment 13: The method for producing the milk or milk-related product according to exemplary embodiment 12, wherein the heat treatment process is proceeded by a pre-treatment comprising:

a. microfiltration or

b. pasteurization or

c. bactofugation or

a combination thereof.

Exemplary embodiment 14: Use of a heat-treatment process comprising a direct injection of steam at a temperature of 140 to 160 degrees C, preferably 150 degrees C, with a holding time of 90 msec or less, more preferably between 25 and 75 msec for producing a milk or milk-related product of any of the exemplary embodiments 1-6.

Exemplary embodiment 15: A use according to exemplary embodiment 14, wherein the heat treatment process is proceeded by a pre-treatment comprising:

a. microfiltration or

b. pasteurization or

c. bactofugation or

a combination thereof.

Below, a number of additional embodiments of the invention are described.

Additional embodiment 1. A method for producing a milk or milk-related product, the method comprising the steps of:

a) providing a milk derivative,

b) physically separating microorganisms from said milk derivative, thus obtaining a partly sterilised milk derivative, and

c) exposing a first composition comprising said partly sterilised milk derivative to a High Temperature (HT)-treatment, wherein the first composition is heated to a temperature in the range of 140 - 180 degrees C, kept in that temperature range for a period of at most 200 msec, and then finally cooled.

Additional embodiment 2. The method according to additional embodiment 1, furthermore comprising the step of:

d) packaging a second composition comprising the HT-treated first composition.

Additional embodiment 3. The method according to any of the preceding additional embodiments, wherein the milk derivative of step a) comprises at most 60% w/w milk fat.

Additional embodiment 4. The method according to any of the preceding additional embodiments, wherein the milk derivative of step a) comprises at most 40% w/w milk fat.

Additional embodiment 5. The method according to any of the preceding additional embodiments, wherein the milk derivative of step a) comprises at most 4% w/w milk fat.

Additional embodiment 6. The method according to any of the preceding additional embodiments, wherein the milk derivative of step a) comprises at most 0.1% w/w milk fat.

Additional embodiment 7. The method according to any of the preceding additional embodiments, wherein the milk derivative of step a) comprises lactose-reduced milk.

Additional embodiment 8. The method according to any of the preceding additional embodiments, wherein the milk derivative of step a) comprises one or more additives.

Additional embodiment 9. The method according to any of the preceding additional embodiments, wherein the milk derivative of step a) has been pasteurised.

Additional embodiment 10. The method according to any of the preceding additional embodiments, wherein the physically separation of step b) involves bactofugation of said milk derivative.

Additional embodiment 11. The method according to any of the preceding additional embodiments, wherein the physically separation of step b) involves microfiltration of said milk derivative.

Additional embodiment 12. The method according to any of the preceding additional embodiments, wherein the physically separation of step b) involves bactofugation and microfiltration of said milk derivative.

Additional embodiment 13. The method according to additional embodiment 11 or 12, wherein the microfiltration is performed using a filter having a pore size in the range of 0.5-1.5 micron.

Additional embodiment 14. The method according to any of the additional embodiments 11-13, wherein the used microfilter is a cross-flow microfilter.

Additional embodiment 15. The method according to additional embodiment 10 or 12, wherein the bactofugation comprises the use of at least one bactofuge. Additional embodiment 16. The method according to any of the preceding additional embodiments, wherein the first composition furthermore comprises one or more lipid sources.

Additional embodiment 17. The method according to additional embodiment 16, wherein the one or more lipid sources comprise(s) a vegetable fat and/or a vegetable oil.

Additional embodiment 18. The method according to additional embodiment 17, wherein the vegetable oil may comprise one or more oils selected from the group consisting of sunflower oil, corn oil, sesame oil, soya bean oil, palm oil, linseed oil, grape seed oil, rapeseed oil, olive oil, groundnut oil and a combination thereof.

Additional embodiment 19. The method according to additional embodiment 17, wherein the vegetable fat may comprise one or more fats selected from the group consisting of palm oil-based vegetable fat, palm kernel oil-based vegetable fat, peanut butter, cacao butter, coconut butter, and combinations thereof.

Additional embodiment 20. The method according to additional embodiment 17, wherein the one or more lipid sources comprise(s) a milk fat source.

Additional embodiment 21. The method according to additional embodiment 20, wherein the milk fat source comprise(s) one or more lipid sources selected from the group consisting of a cream, a cream double, an anhydrous butter fat, a whey cream, a butter oil, a butter oil fraction , and combinations thereof.

Additional embodiment 22. The method according to any of the additional embodiments 17-21, wherein the one or more lipid sources have been heat-treated at a temperature in the range of 70-100 degrees C for a period of 2-200 seconds.

Additional embodiment 23. The method according to any of the additional embodiments 17-22, wherein the one or more lipid sources have been heat treated at a temperature in the range of 100-180 degrees C for a period of 10 msec- 4 sec.

Additional embodiment 24. The method according to any of the preceding additional embodiments, wherein the HT-temperature range of step c) is 140-180 degrees C, and preferably 145-170 degrees C, and even more preferably 150-160 degrees C.

Additional embodiment 25. The method according to any of the preceding additional embodiments, wherein the first composition is kept in the HT-temperature range for a period of at most 200 msec, preferably at most 150 msec, and even more preferably at most 100 msec.

Additional embodiment 26. The method according to any of the preceding additional embodiments, wherein the duration of the HT-treatment including heating, holding, and cooling the first composition, is at most 500 msec, preferably at most 300 msec, and even more preferably at most 200 msec, such as 150 msec.

Additional embodiment 27. The method according to any of the preceding additional embodiments, wherein the duration of the cooling of the HT-treatment is in at most 50 msec, preferably at most 10 msec, and even more preferably at most 1 msec, such as 0.1 msec.

Additional embodiment 28. The method according to any of the preceding additional embodiments, wherein the heating of the HT-treatment is performed by contacting the first composition with steam.

Additional embodiment 29. The method according to any of the preceding additional embodiments, wherein the heating of the HT-treatment comprises contacting the first composition with steam.

Additional embodiment 30. The method according to any of the preceding additional embodiments, wherein the heating of the HT-treatment comprises exposing the first composition to electromagnetic energy.

Additional embodiment 31. The method according to any of the preceding additional embodiments, wherein the cooling of the HT-treatment comprises flash cooling.

Additional embodiment 32. The method according to any of the additional embodiments 2-31, wherein the packaging of step d) is aseptic packaging.

Additional embodiment 33. The method according to any of the additional embodiments 32, wherein the aseptic packaging is performed by using an aseptic filling system.

Additional embodiment 34. The method according to any of the additional embodiments 32-33, wherein the packaging of step d) is performed by filling the milk or milk-related product into one or more aseptic container(s).

Additional embodiment 35. The method according to any of the preceding additional embodiments, furthermore comprising an enzyme inactivation step, said enzyme inactivation step comprising keeping the liquid to be treated at a temperature in the range of 70-90 degrees C for a period in the range of 30-500 seconds.

Additional embodiment 36. The method according to additional embodiment 35, wherein the first composition is exposed to the enzyme inactivation step prior to the HT-treatment of step c).

Additional embodiment 37. The method according to any of the additional embodiments 35-36, wherein the second composition is exposed to the enzyme inactivation step prior to the packaging of step d).

Additional embodiment 38. A milk or milk-related product obtainable by the method according to any of additional embodiments 1-37.

Additional embodiment 39. The milk or milk-related product according to additional embodiment 38, wherein shelf life of said milk or milk-related product is at least 30 days, when kept at 25 degrees C.

Additional embodiment 40. The milk or milk-related product according to additional embodiment 38, wherein shelf life of said milk or milk-related product is at least 49 days, when kept at 25 degrees C the first 21 days after packaging and at 5 degrees C the subsequent time.

Additional embodiment 41. The milk or milk-related product according to additional embodiment 38, wherein shelf life of said milk or milk-related product is at least 49 days, when kept at 25 degrees C the first 21 days after packaging and at 5 degrees C the subsequent time.

Additional embodiment 42. The milk or milk-related product according to additional embodiment 38, wherein shelf life of said milk or milk-related product is at least 70 days, when kept at 5 degrees C.

Additional embodiment 43. The milk or milk-related product according to additional embodiment 38, wherein shelf life of said milk or milk-related product is at least 119 days, when kept at 25 degrees C.

Additional embodiment 44. The milk or milk-related product according to additional embodiment 38, wherein shelf life of said milk or milk-related product is at least 182 days, when kept at 25 degrees C.

Additional embodiment 45. The milk or milk-related product according to any of the additional embodiments 38-44, wherein at most 40% (w/w) of the beta-lactoglobulin is denatured relative to the total amount of both denatured and non-denatured beta-lactoglobulin.

Additional embodiment 46. Use of a combination of physical separation of microorganisms and HT-treatment of a milk derivative to reduce the cooked flavour and/or improve the healthiness of the resulting milk or milk-related product.

Additional embodiment 47. A milk processing plant for the converting a milk derivative to a milk or milk-related product having a long shelf life, said plant comprising

- a physical separation section adapted to remove microorganims from the milk derivative,

- a HT-treatment section in fluid communication with said physical separation section, which HT-treatment section is adapted to heat the liquid product of the physical separation section to a temperature in the range of 140-180 degrees C for a period of at most 200 msec. and subsequently cool the liquid product, and

- a packaging section in fluid communications with the HT-treatment section for packaging the product of the milk processing plant.

EXAMPLES

**Example** 1: Production of milk of the invention

Long shelf life milk according to the present invention was produced within 24 hours of collection from the dairy farmer according to the following processing steps, with reference to the flow diagram in Fig. 1:

Step 1: Raw (unpasteurised) milk was collected and stored at 5 degrees C;

Step 2: Raw milk from step 1 was preheated to 50-60 degrees C using a plate heat exchanger and then subjected to centrifugation, using a standard dairy centrifuge to produce a cream fraction and a skim milk fraction;

Step 3: The cream fraction from step 2 was sterilised by UHT treatment, consisting of heating to 143 degrees C for a period of 4 seconds in an infusion unit (APV) using direct steam infusion and then cooling to 20 degrees C.

Step 4: The skim-milk from step 2 was then microfiltered (MF) using isoflux ceramic tubular membranes (specifications given below) for tangential microfiltration where the re-circulation flow rate of the retentate is set to approximately 116-126 litres/hr, and the permeate flow was approximately 117-128 litres of filtered skim-milk per hour. The permeate was collected in sterile containers.

Step 5: The permeate of step 4 (micro-filtered skim-milk) was pre-heated to a temperature of 72 degrees C for 15 seconds (low heat pasteurisation), and then treated according to either step 6.

Step 6: The pre-heated product of step 5 was sterilised at 150 degrees C for a holding time of 0.09 second by direct steam injection using a lenient steam injection apparatus (LSI) manufactured by GEA/NIRO, and flash cooled to 70-72 degrees C.

Step 7: A milk sample was prepared comprising the UHT cream fraction from step 3 mixed with the heat treated skim-milk product of step 7 to produce a milk with a final fat content of 1.5 % (w/w) fat.

Step 8. The product of step 7 with a fat content of 1.5% was then homogenised at 200rpm at 50bar.

Step 9. The product of step 8 was cooled to the packaging temperature of 5 degrees C and aseptically packaged in sterile containers and sealed.

Step 10. The packaged milk product of step 9 was stored at 5 degrees C.

Isoflux ceramic tubular membranes: comprise 39 channels with a length of 1020 mm and a pore size of 0.8 micrometer, where the thickness of the separating layer decreases from the inlet to the outlet of the filter, allowing an even flow of permeate along the filter. The filters (36) are mounted in parallel in a housing the filters. The carter is supplied with one inlet for the skim-milk to be filtered and two outlets for the permeate. The carter is supplied with a pump which ensures the tangential circulation of the skim-milk over the membrane filter. The retentate circulates back to the skim-milk to be treated. Filters and carter are supplied by Tami (Germany).

**Example 2: Production of the prior art milk**

The prior art milk was produced according Example 1, but with the exception that step 4 (the microfiltration) was omitted, and the skim-milk of step 2 was fed directly to step 5.

**Example 3 - Methods of analysis**

Analysis A: Sensory testing

A sensory profile or QDA, Quantitative Descriptive Analysis, is a description of the sensory properties of a product as well as the intensity of properties. It is an established method that contains a list of attributes, normally in the order that they are perceived, and an intensity value for each attribute. Sensory profiling is described in ISO 13299:2003 and in ISO 22935-1:2009, ISO 22935-2:2009, and ISO 22935-3:200 which relate to Sensory analysis of milk and milk products.

Sample/quality of sample:

To be able to conduct the test there must be samples for training available before the test. For the actual test there must be enough amount of each sample. They should also be of representative quality.
The numbers of samples that can be evaluated during one session depend on the nature of the sample and the amount of attributes to be evaluated. If only a few attributes are to be evaluated, more samples can be included in the test, and vice versa. Normally a maximum of ten samples are evaluated in one session.

Panel leader:

The panel leader is responsible for training the panel and the design and performance of the test. The requirements of a panel leader is described in ISO 13300-1:2006

Assessors:

The assessors in the panel are chosen because of their ability to detect flavours at low concentration. The recruitment process is described in ISO 8586-1:1993. They are trained for a certain type of products, in this case milk. Before a sensory profile test the panel trains several times with the products and attributes that are to be tested. The aim of the training is to get a uniform way to use the scale and understand the meaning of the scale.
For each test a panel of 6-12 assessors is used to evaluate the products.

Evaluation room:

The room where the training and the test are performed should meet the requirements stated in ISO 8589:2007.

Presentation of samples:

The samples should be served blind with a three-digit code, the serving order randomized. Samples are served in small plastic pots with lid on ("Aseptisk provburk" 100 ml from www.kemikalia.se art. no. 165555).

Scale and training session:

A continuous linear scale with anchored end points is used. The end points are described as "nothing at all" of the attribute = 0, respectively "very, very strong" intensity of the attribute =10. The task for each assessor is to mark the scale to indicate the intensity of each attribute. For boiled/cooked flavour the panel has agreed that low pasteurized milk (72 degrees C/15 sec, 1.5 % fat) has the value 0, ESL milk (Direct steam injection 127 degrees C/2 sec, 1.5 % fat) 2.5 and UHT (Direct steam injection 143 degrees C/6 sec, 1.5 % fat) 7,5 on the scale. The numbers are not shown to the assessors during the test.
During the training period the assessors will learn about how to identify the attributes and how to evaluate them, by look, smell, taste etc. They will also establish a common way to evaluate each attribute, e.g. boiled flavour for ESL is 2,5 on the scale. One or more individual evaluation is also done during the training period to evaluate each assessor's ability to perform the test.

The test:

Each session starts with training/review of the panel. Three known samples are used first; low pasteurized milk (72 degrees C/15 sec, 1.5 % fat), ESL milk (Direct steam injection 127 degrees C/2 sec, 1.5 % fat) and UHT (Direct steam injection 143 degrees C/6 sec, 1.5 % fat), which all have specific positions on the scale. After that, the panel gets one or two unknown samples, which they through consensus decide where to put on the scale (calibration of panel).
The panel should be informed about the number of samples to evaluate and any other information that might be necessary. FIZZ Software is used for the evaluation. During the test one sample at a time is served to the assessors. The task for the panel is then to look/feel/smell/taste the product and the put a mark on the scale for each attribute. It is also possible for the assessor to write a comment for each sample. They should rinse the mouth with water between attributes and samples.

References for Analysis A:

ISO 22935-1:2009, ISO 22935-2:2009, and ISO 22935-3:2009 which relate to sensory analysis of milk and milk products.

ISO 13299:2003 Sensory analysis -- Methodology -- General guidance for establishing a sensory profile

ISO 13300-1:2006 Sensory analysis -- General guidance for the staff of a sensory evaluation laboratory -- Part 1: Staff responsibilities

ISO 8586-1:1993 Sensory analysis -- General guidance for the selection, training and monitoring of assessors -- Part 1: Selected assessors

ISO 8589:2007 Sensory analysis -- General guidance for the design of test rooms

Stone, H and Sidel, J.L (2004) Sensory Evaluation Practices. Tragon Corporation, California, ISBN0-12-672690-6

Analysis B - Particle size distribution:

Particle size in a milk sample is determined using a Malvern apparatus running a Mastersizer 2000 program where average particle diameter is measured in terms of mean diameter (micrometer) by volume.

Analysis C: Denatured beta-lactoglobulin

The determination of the degree of denaturation of beta-lactoglobulin of a processed milk product requires a sample of the unprocessed milk derivative and a sample of the processed milk product. Each sample is analysed according to ISO 13875:2005(E) "Liquid milk - Determination of acid-soluble beta-lactoglobulin content" to determine the amount of acid soluble beta-lactoglobulin in the samples - expressed in the unit mg/L sample.
The degree of denaturation (DD) of beta-lactoglobulin of the milk product is calculated via the formula:

$$DD = 100\% * (BLGr - BLGh)/BLGr$$

Wherein:

DD is the degree of denaturation (DD) of beta-lactoglobulin.
BLGr is the content of beta-lactoglobulin in the untreated milk derivative (mg/L).
BLGh is the content of beta-lactoglobulin in the processed milk product to which the degree of denaturation relates (mg/L).

Analysis D: Lactulose determination:

Lactulose content in a milk sample is measured by an enzymatic assay, defined by the International Organisation for Standards, given publication No: ISO 11285:2004(E); IDF 175: 2004 (E).

Analysis E: Hydroxy Methyl Furfural (HMF) Quantification by HPLC

The content of HMF, as well as the content of HMF and its precursors, in a milk sample are measured in parallel, together with a set of HMF standards, according to the following protocol:

HMF standards: 1 to 60 microM Hydroxy Methyl Furfural (HMF) aqueous solutions are prepared from 0.5 mM and 1.2 mM HMF standard aqueous solutions in milli Q water.

Preparation of milk samples to be analysed: A 9% (weight/volume) aqueous solution is prepared from a milk sample and the solution is then stirred for at least 1 hour. A 10 ml sample is taken from this solution, which is then transferred to a 50 ml flask, to which 5 ml 0.15 M oxalic acid is then added to give "Milk HMF sample".
Sample Pre-treatment: Quantification of HMF, and HMF and its precursors respectively in a "Milk HMF sample" are analysed separately, where the samples receive the following pre-treatment:

1) A "Milk HMF sample" is left for 60 min. at room temperature prior to quantifying the content of HMF in the sample "as is";
2) A "Milk HMF sample" is cooked for 60 min. under lid to convert HMF precursors into HMF, followed by cooling to 5 degrees C, prior to quantifying the content of HMF including precursors in the sample.

After cooling the samples, 5 ml 40% TCA (trichloracetic acid) is added to each of the above pre-treated samples, as well as to each HMF standard and blank control sample, which are each then individually filtered through 0.22 micrometer filters, and the filtrate is them subjected to HPLC analysis, as follows.
Samples (20 microL volume) are injected into an HPLC, equipped with an Apex II ODS 5micrometer (vydac), and separated with a mobile phase comprising: Eluent A: H2O, 0.1% TFA; and Eluent B: 90% acetonitrile, 10% H2O and 0.1% TFA in the following gradient:

| Time [min] | Flow [ml/min] | %A | %B | Curve |
|---|---|---|---|---|
| 0,01 | 1,00 | 100,0 | 0,0 | 6 |
| 2,00 | 1,00 | 100,0 | 0,0 | 6 |
| 10,00 | 1,00 | 93,0 | 7,0 | 6 |
| 11,00 | 1,00 | 100,0 | 0,0 | 6 |
| 15,00 | 1,00 | 100,0 | 0,0 | 6 |
| 16,00 | 0,00 | 100,0 | 0,0 | 6 |

HMF, is detected at 284 nm, and the HMF peak area for each sample chromatogram is determined, together with the peak areas of the HMF standards, that are used to calculate the slope of the calibration curve, which is forced through 0.0.

HMF in a sample is calculated as follows:

$$HMF \text{ [microgram/100g]} = (Samplepeakarea * MW_{HMF} * V_{Dissolvement})/(Slope * m_{Sample})$$

Where :

Samplepeakarea = Peak area of HMF in the sample chromatogram
Slope = The slope of the calibration curve
$m_{Sample}$ = The weighed sample amount [g]
$V_{Dissolvement}$ = Total volume dissolvement, (10 ml.)
$MW_{HMF}$ = 126.1 g/mol

Analysis F - Furosine determination:

The milk sample is hydrolysed over-night in HCl solution at 105 degrees C; and one aliquot of the hydrolyzate was used to determine the total Nitrogen content; and another aliquot was passed through a C18 column to separate out the furosin, which was then determined by HPLC-DAD and quantitated with respect to a furosin standard.

Analysis G - Plamin/plasminogen determination:

Plasmin activity in milk samples and plasmin-derived activity after activation of plasminogen by urokinase were determined by measuring the concentration of the fluorescent product AMC (7-amido-4-methyl coumarin) released by plasmin from the specific non-fluorescent coumarin peptide N-succinyl-L-alanyl-L-phenylalanyl-L-lysyl-7-amido-4-methyl coumarin [1].

Plasmin and plasminogen assays were carried out as previously described by Saint Denis et al. [2]. One millilitre of milk sample was pre-incubated for 10 min at 37 degrees C with 1 mL of 100 mmol/L Tris-HCl buffer, pH 8.0, containing 8 mmol/L EACA and 0.4 mol/L NaCl to dissociate plasmin from casein micelles.

Plasminogen was previously converted into active plasmin [3, 4, 5] by a 60 min incubation at 37 degrees C of 1 mL milk sample in the presence of 1 mL urokinase solution (200 Ploug U/mL in 100 mmol/L Tris-HCl buffer, pH 8.0, with 8 mmol/L EACA and 0.4 mol/L NaCl). Incubations were performed at 37 degrees C in a V-bottom microtube.

The incubated reaction mixture consisted of 200 microliter of prepared milk samples mixed with 200 microliter of 2.0 mmol/L N-succinyl-L-alanyl-L-phenylalanyl-L-lysyl-7-amido-4-methyl coumarin (dissolved in 20% v/v dimethyl sulfoxyde and 80% v/v 60 mmol/L Tris-HCl buffer, pH 8.0, with 0.25mol/L NaCl). After 10 min pre-incubation to stabilize the temperature at 37 degrees C, the rate of peptide hydrolysis was determined by measuring the fluorescence of released AMC during incubation, at 3 time points over an interval of 5 to 90 min, depending on the plasmin or plasmin-derived activity in the sample.

For each measurement, 100 microliter of reaction mixture was mixed in a cuvette with 1 mL of distilled water and 1 mL of Clarifying Reagent (registered trademard) to stop any enzymatic reactions. These steps enabled direct spectrofluorometric measurements (ex = 370 nm, em = 440 nm) without interference of milk turbidity.

Plasminogen content was calculated by subtracting native plasmin activity from the total plasmin activity after plasminogen activation by urokinase. Each sample was analyzed in duplicate. The increase in fluorescence intensity during incubation was linear up to 4 h. A similar reaction mixture without milk sample was used as a control to determine spontaneous hydrolysis of the coumarin peptide, which was negligible in all experiments.

References to Analysis G:

[1] Pierzchala P.A., A new fluorogenic substrate for plasmin, Biochem. J. 183 (1979) 555-559.
[2] Saint-Denis T., Humbert G., Gaillard J.L., Enzymatic assays for native plasmin, plasminogen and plasminogen activators in bovine milk, J. Dairy Res. 68 (2001) 437-449.
[3] Korycka-Dahl M., Ribadeau-Dumas B., Chene N., Martal J., Plasmin activity in milk, J. Dairy Sci. 66 (1983) 704-711.
[4] Richardson B.C., Pearce K.N., The determination of plasmin in dairy products, N. Z. J. Dairy Sci. Technol. 16 (1981) 209-220.
[5] RollemaH.S.,Visser S., Poll J.K., Spectrophotometric assay of plasmin and plasminogen in bovine milk, Milchwissenschaft 38 (1983) 214-217.

**Example 4: Comparative analysis**

The milk product of Example 1 (the milk of the invention) and the milk product of Example 2 (the prior art milk) were analysed with respect to:

- cooked taste - using the above analysis A
- denatured beta-lactoglobulin - using the above analysis C

The results are shown in Figs. 3 and 4.
As illustrated in Fig. 3, the cooked taste was found by the sensory evaluation to be lower in the sample treated with microfiltration in combination with the high temperature treatment compared to the sample subjected to the high temperature treatment alone. The cooked taste in a standard UHT milk product (Direct steam injection, 143 degrees C/6 sec) was much stronger than in the other samples.
Along the same lines, Fig. 4 shows that the degree of denaturation of beta-lactoglobulin surprisingly was lower in the sample treated with microfiltration in combination with the high temperature treatment compared to the sample subjected to high temperature treatment alone. The beta-lactoglobulin denaturation in a standard UHT milk product (Direct steam injection, 143 degrees C/6 sec) was much higher than the other samples.

**Claims**

1. A long shelf life milk or milk-related product wherein at most 40% (w/w) of the beta-lactoglobulin is denatured relative to the total amount of both denatured and non-denatured beta-lactoglobulin.

2. The long shelf life milk or milk-related product according to claim 1 containing 0 colony forming units/mL.

3. The long shelf life milk or milk-related product according to claim 1 or 2, which milk or milk-related product is sterile.

4. The milk or milk-related product according to any of the preceding claims, wherein at most 35% (w/w) of the beta-lactoglobulin is denatured relative to the total amount of both denatured and non-denatured beta-lactoglobulin.

5. The milk or milk-related product according to any of the preceding claims, wherein the milk or milk-related product comprises at most 60% w/w milk fat.

6. The milk or milk-related product according to any of the preceding claims, comprising a most at most 0.5 g lactose per kg.

7. The milk or milk-related product according to any of the preceding claims, comprising a most at most 0.05 g lactose per kg.

8. The milk or milk-related product according to any of the preceding claims, wherein shelf life of said milk or milk-related product is at least 30 days, when kept at 25 degrees C.

9. The milk or milk-related product according to any of the claims 1-6, wherein shelf life of said milk or milk-related product is at least 49 days, when kept at 25 degrees C the first 21 days after packaging and at 5 degrees C the subsequent time.

10. The milk or milk-related product according to any of the claims 1-6, wherein shelf life of said milk or milk-related product is at least 70 days, when kept at 5 degrees C.

11. The milk or milk-related product according to any of the claims 1-6, wherein shelf life of said milk or milk-related product is at least 119 days, when kept at 25 degrees C.

12. The milk or milk-related product according to any of the claims 1-6, wherein shelf life of said milk or milk-related product is at least 182 days, when kept at 25 degrees C.

13. The milk or milk-related product according to any of the preceding claims, obtainable by a method comprising the steps of:

a) providing a milk derivative,
b) physically separating microorganisms from said milk derivative, thus obtaining a partly sterilised milk derivative, and
c) exposing a first composition comprising said partly sterilised milk derivative to a High Temperature (HT)-treatment, wherein the first composition is heated to a temperature in the range of 140 - 180 degrees C, kept in that temperature range for a period of at most 200 msec, and then finally cooled.

14. The milk or milk-related product according to claim 13, wherein the method furthermore comprises an enzyme inactivation step, said enzyme inactivation step comprising keeping the liquid to be treated at a temperature in the range of 70-90 degrees C for a period in the range of 30-500 seconds.

15. The milk or milk-related product according to claim 13 or 14, wherein the method furthermore comprises the step of:

d) packaging a second composition comprising the HT-treated first composition.

# Fig. 1

EP 2 783 573 A2

# Fig. 2a

# Fig. 2b

# Fig. 2c

## Fig. 3

## Fig. 4

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 9807328 A
- WO 2006123047 A1

## Non-patent literature cited in the description

- Tetra Pak Dairy processing Handbook. 2003
- Thermal technologies in food processing
- Standard methods for the examination of dairy products. Am. Publ. Health Assoc., Washington, DC. 1978
- **KAI-PING et al.** *J. Agric. Food Chem.,* 1996, vol. 44, 1058-1063
- Grade "A" Pasteurized Milk Ordinance. U.S. Dept. of Health and Human Services, 2001
- **GILLIS et al.** *J Dairy Sci.,* 1985, 2875-9
- Standard methods for the examination of dairy products. Am. Publ. Health Assoc, 1978
- **P. A. VAZQUEZ-LANDAVERDE et al.** *J. Dairy Sci.,* 2005, vol. 88, 3764-3772
- **SINGH et al.** *Lait,* 1989, vol. 69 (2), 131-136
- **KULMYRZAEV et al.** *Lait,* 2002, vol. 82, 725-735
- **STONE, H ; SIDEL, J.L.** Sensory Evaluation Practices. Tragon Corporation, 2004
- **PIERZCHALA P.A.** A new fluorogenic substrate for plasmin. *Biochem. J.,* 1979, vol. 183, 555-559
- **SAINT-DENIS T. ; HUMBERT G. ; GAILLARD J.L.** Enzymatic assays for native plasmin, plasminogen and plasminogen activators in bovine milk. *J. Dairy Res.,* 2001, vol. 68, 437-449
- **KORYCKA-DAHL M. ; RIBADEAU-DUMAS B. ; CHENE N. ; MARTAL J.** Plasmin activity in milk. *J. Dairy Sci.,* 1983, vol. 66, 704-711
- **RICHARDSON B.C. ; PEARCE K.N.** The determination of plasmin in dairy products. *N. Z. J. Dairy Sci. Technol.,* 1981, vol. 16, 209-220
- **ROLLEMA H.S. ; VISSER S. ; POLL J.K.** Spectrophotometric assay of plasmin and plasminogen in bovine milk. *Milchwissenschaft,* 1983, vol. 38, 214-217